# EUROPEAN PATENT APPLICATION

(11) **EP 2 461 028 A2**
(43) Date of publication of application: **06.06.2012**
(21) Application number: 11190449.6
(22) Date of filing: 24.11.2011
(51) Int. Cl.: F03D 9/00, F03D 7/02, F03D 11/04, E02D 27/50

(54) **A floating offshore wind farm, a floating offshore wind turbine and a method for positioning a floating offshore wind turbine**

(30) Priority: 03.12.2010 US 959624
(71) Applicant: General Electric Company, Schenectady, NY 12345 (US)
(72) Inventor: Scholte-Wassink, Hartmut, 48499 Salzbergen (DE)
(74) Representative: Bedford, Grant Richard

(57) **Abstract**

A floating offshore wind turbine (101, 102, 103, 104) and a floating offshore wind farm (500) with at least one floating offshore wind turbine (101, 103, 103, 104) are provided. The floating offshore wind turbine (101, 103, 103, 104) includes a floating platform (70) anchored to an underwater ground (96), a wind turbine (10) mounted on the floating platform (70), and a drive (50, 51, 52). The drive (50, 51, 52) is adapted to horizontally move the floating platform (70). Further a method (1000, 1001, 1002, 1003, 1004, 1005) for positioning a floating offshore wind turbine (100) is provided.

## Description

The subject matter described herein relates generally to floating offshore wind farms, floating offshore wind turbines and methods therefore, and, more particularly, to methods for reducing the load and/or increasing the electric power production of floating offshore wind farms, and to related floating offshore wind turbines and offshore wind farms.

At least some known wind turbines include a tower and a nacelle mounted on the tower. A rotor is rotatably mounted to the nacelle and is coupled to a generator by a shaft. A plurality of rotor blades extend from the rotor. The blades are oriented such that wind passing over the blades turns the rotor and rotates the shaft, thereby driving the generator to generate electricity.

The wind energy resources off the coasts are vast. Therefore, offshore wind energy is an energy resource that may help countries to meet their renewable energy objectives. Offshore wind energy may be harvested in coastal areas using traditional fixed-foundation wind turbine technologies, and in deep-water areas using floating wind turbines. So far, fixed foundation offshore wind farms have only been used commercially in water depth up to about 30 m. Thus, fixed foundation offshore wind farms can only harvest a small percentage of the globally available offshore wind energy. Further, offshore wind farms are typically only accepted when acoustic and visual impact is small. Floating wind turbines may be used in deep water further away from the shore, and from shipping and fishing lanes. Still, floating offshore wind farms may be installed close to heavily developed coastal cities. In addition to lower impact on coastal areas, deep water wind farms may benefit from stronger and steadier wind conditions due to the absence of topographic wind obstructing features. However, the higher distance and the stronger wind conditions may yield higher expenditures for maintenance. Accordingly, there is ongoing need to improve floating wind turbines and floating wind farms, in particular with respect to power production and/or load reduction.

In one aspect according to the present invention, a floating offshore wind turbine is provided. The floating offshore wind turbine includes a floating platform anchored to an underwater ground, a wind turbine mounted on the floating platform, and a drive adapted to move the floating platform in at least one horizontal direction.

In another aspect, a floating offshore wind farm is provided. The floating offshore wind farm includes a first wind turbine mounted on a first floating structure, a second wind turbine, a positioning system adapted to determine a horizontal position of the first wind turbine relative to the second wind turbine, and a drive system which is adapted to horizontally move the first wind turbine relative to the second wind turbine.

In yet another aspect, a method for positioning a floating offshore wind turbine is provided. The floating offshore wind turbine includes a wind turbine mounted on a floating structure which is anchored to an underwater ground. The method includes providing the floating offshore wind turbine, determining a first horizontal position of the floating offshore wind turbine, determining a second horizontal position, and moving the floating offshore wind turbine to the second horizontal position.

Various aspects, advantages and features of the present invention are apparent from the dependent claims, the description and the accompanying drawings, in which:
Fig. 1 is a perspective view of an exemplary floating offshore wind turbine;
Fig. 2 is a schematic side view of a floating offshore wind turbine according to an embodiment;
Fig. 3 is schematic front view of the floating offshore wind turbine shown in Fig. 2 according to another embodiment;
Fig. 4 is a schematic sectional view of a floating offshore wind turbine according to an embodiment;
Fig. 5 is a schematic sectional view of a floating offshore wind turbine according to another embodiment;
Fig. 6 is a schematic sectional view of a floating offshore wind turbine according to yet another embodiment;
Fig. 7 is a schematic illustration of a force acting on the floating offshore wind turbine of Fig. 6;
Figs. 8 to 10 illustrate a floating offshore wind farm and its operation under changing wind condition according to embodiments;
Fig. 11 illustrate a floating offshore wind farm and its operation according to further embodiments;
Fig. 12 illustrates a method for horizontally positioning a floating offshore wind turbine according to an embodiment;
Fig. 13 illustrates a method for horizontally positioning a floating offshore wind turbine according to another embodiment;
Fig. 14 illustrates a method for horizontally positioning a floating offshore wind turbine according to yet another embodiment;
Fig. 15 illustrates a method for horizontally positioning a floating offshore wind turbine according to an embodiment;
Fig. 16 illustrates a method for horizontally positioning a floating offshore wind turbine according to yet another embodiment; and
Fig. 17 illustrates a method for a floating offshore wind turbine according to an embodiment.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

The embodiments described herein include floating offshore wind farms, floating offshore wind turbines and methods therefore. The floating offshore wind turbines and operating methods facilitate a lower load of the wind turbines and/or a higher energy yield of floating offshore wind farms. Further, the energy production and/or load of the wind turbines in a floating offshore wind farm may be better balanced. Thus, the maintenance cost per produced energy unit may be reduced, the lifetime of floating wind turbines increased, and the acoustic impact on the marine fauna may be reduced. Furthermore, the floating wind turbines may avoid a floating obstacle such as a damaged ship. Thus, the safety of a floating offshore wind farm may be increased.

As used herein, the term "wind turbine" is intended to be representative of any device that generates rotational energy from wind energy, and more specifically, converts kinetic energy of wind into mechanical energy. The term "wind turbine" as used herein shall particularly embrace devices that generate electrical power from rotational energy generated from wind energy.

As used herein, the terms "offshore wind turbine" and "offshore wind farm" refer to the installation of a wind turbine and a wind farm, respectively, in bodies of water such as the sea. Unlike the typical usage of the term "offshore" in the marine industry, the terms "offshore wind turbine" and "offshore wind farm" as used herein embrace respective installations in inshore areas such as lakes, fjords and sheltered coastal areas. As used herein, the terms "floating offshore wind turbine" and "floating offshore wind farm" refer to an offshore wind turbine mounted on a floating structure and a wind farm of such wind turbines, respectively.

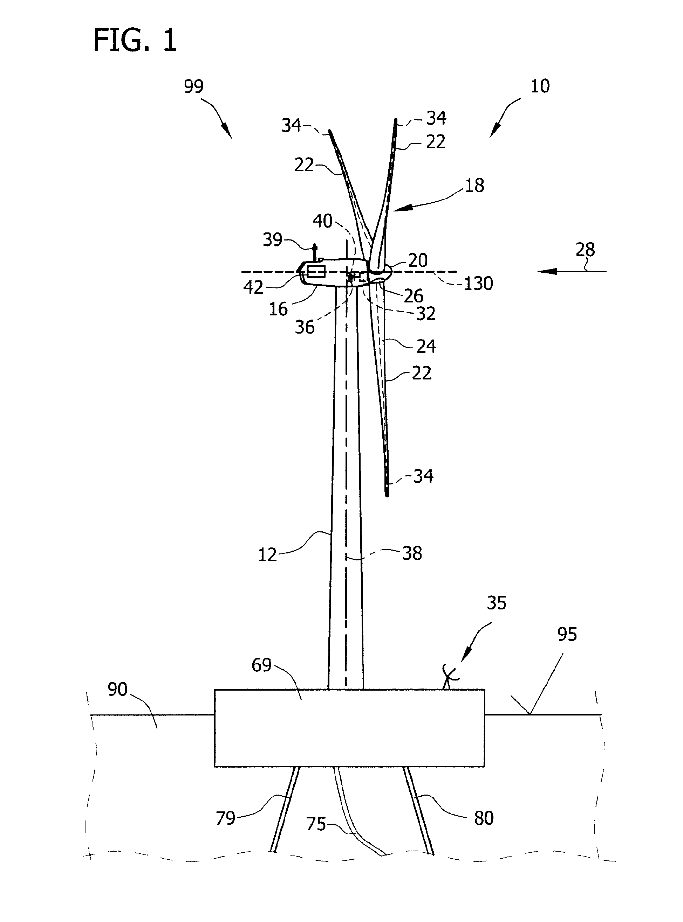

Figure 1 shows a perspective view of an exemplary floating offshore wind turbine 99. The exemplary floating offshore wind turbine 99 includes a wind turbine 10 and a floating platform 69 to which the wind turbine 10 is mounted. Platform 69 floats in a waters 90, typically in a sea 90 or in a lake 90, and carries wind turbine 10. As illustrate by the reference numerals 79, 80, platform 69 is anchored to an underwater ground to limit the freedom of movement of the floating offshore wind turbine 99 in horizontal directions, i.e. in directions which are substantially parallel to the surface 95 of the waters 90. However, floating offshore foundations have typically no fixed vertical positions to be able to compensate sea level variations.

Floating platform 69 may be anchored to the underwater ground by one or more flexible coupling members 79, 80 such as anchoring ropes, anchor cables and anchor chains. Long-term stability of floating platforms and their mooring in deep waters has been successfully demonstrated by the marine and offshore oil industries over many decades. In the exemplary embodiment, the body of floating platform 69 is anchored by two flexible coupling members 79, 80 such that an upper part of platform 69 is above the water. Floating platform 69 may, however, also be immersed in the waters 90. In the exemplary embodiment, floating platform 69 is of the single pontoon type. Floating platform 69 may, for example, be a box-shaped or a disc-shaped tank 69 with a large horizontal extension and a relatively short vertical extension. In other embodiments, floating platform 69 is of the spar-buoy type. Spar-buoys consist of a single long cylindrical tank and achieve stability by moving the center of mass as low as possible. In still other embodiments, floating platform 69 is a more complex structure and includes three or more buoyant columns to support wind turbine 10. In the following, the terms "floating platform" and "floating structure" are used synonymously.

In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from the floating platform 69, a nacelle 16 mounted on tower 12, and a rotor 18 that is coupled to nacelle 16.

Rotor 18 includes a rotatable hub 20 and at least one rotor blade 22 coupled to and extending outward from hub 20. More specifically, hub 20 is rotatably coupled to an electric generator 42 positioned within nacelle 16. Electric generator 42 is typically coupled via a transformer (not shown) and an underwater power cable 75 to a grid.

In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in Fig. 1) between a support system (not shown in Fig. 1) on floating platform 69 and nacelle 16. In an alternative embodiment, tower 12 is any suitable type of tower having any suitable height.

Rotor blades 22 are spaced about hub 20 to facilitate rotating rotor 18 to enable kinetic energy to be transferred from the wind into usable mechanical energy, and subsequently, electrical energy. Rotor blades 22 are mated to hub 20 by coupling a blade root portion 221 to hub 20 at a plurality of load transfer regions 26. Load transfer regions 26 have a hub load transfer region and a blade load transfer region (both not shown in Figure 1). Loads induced to rotor blades 22 are transferred to hub 20 via load transfer regions 26.

In one embodiment, rotor blades 22 have a length ranging from about 15 meters (m) to about 90 m. Alternatively, rotor blades 22 may have any suitable length that enables wind turbine 10 to function as described herein. For example, other nonlimiting examples of blade lengths include 10 m or less, 20 m, 37 m, or a length that is greater than 90 m. The exemplary embodiment of Fig. 1 illustrates an upwind wind turbine 99 in which the rotor 18 faces the wind. The rotor 18 may, however, also be arranged downwind, i.e. on the lee side of tower 12. As wind strikes rotor blades 22 from a direction 28, rotor 18 is rotated about an axis of rotation 130. Further, in the exemplary embodiment, as direction 28 changes, a yaw direction of nacelle 16 may be controlled about a yaw axis 38 to position rotor blades 22 with respect to direction 28.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18. In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

In the exemplary embodiment, control system 36 is shown as being centralized within nacelle 16, however, control system 36 may be a distributed system throughout wind turbine 10, on or in the floating platform 69, within a floating wind farm, and/or at a remote control center. Control system 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels.

In the embodiments described herein, memory may include, without limitation, a computer-readable medium, such as a random access memory (RAM), and a computer-readable non-volatile medium, such as flash memory. Alternatively, a floppy disk, a compact disc-read only memory (CD-ROM), a magneto-optical disk (MOD), and/or a digital versatile disc (DVD) may also be used. Also, in the embodiments described herein, input channels include, without limitation, sensors and/or computer peripherals associated with an operator interface, such as a mouse and a keyboard. Further, in the exemplary embodiment, output channels may include, without limitation, a control device, an operator interface monitor and/or a display.

Processors described herein process information transmitted from a plurality of electrical and electronic devices that may include, without limitation, sensors, actuators, compressors, control systems, and/or monitoring devices. Such processors may be physically located in, for example, a control system, a sensor, a monitoring device, a desktop computer, a laptop computer, a programmable logic controller (PLC) cabinet, and/or a distributed control system (DCS) cabinet. RAM and storage devices store and transfer information and instructions to be executed by the processor(s). RAM and storage devices can also be used to store and provide temporary variables, static (i.e., non-changing) information and instructions, or other intermediate information to the processors during execution of instructions by the processor(s). Instructions that are executed may include, without limitation, wind turbine control system control commands. The execution of sequences of instructions is not limited to any specific combination of hardware circuitry and software instructions.

In order to deliver the required electrical output power in accordance to external request and stably under variable wind conditions a control system is required. Usually, the control system 36 can operate as a central control system which controls floating wind turbine 99 via special hardware components, such as for example a Single-Point-Operational status (SPS) controller and bus connections such as an Ethernet LAN, a Controller Area Network (CAN) bus, a FlexRay bus or the like. Typically, control system 36 operates as primary controller which supervises at least a part of the functions of the wind turbine 10. This may include controlling of other controllers of the wind turbine 10, communication with other wind turbines and/or a wind farm management system as well as error handling and operational optimization. Further, a SCADA (Supervisory, Control and Data Acquisition) program may be executed on the hardware of control system 36. Control system 36 typically receives information from sensors and other components of the wind turbine 10 such as the generator 42, load sensors of the rotor blades 22 and an anemometer 39. In the exemplary embodiment, control system 36 further receives the position of the floating wind turbine 99 from a satellite-based positioning system, e.g. from a GPS. For safety reasons, floating wind turbine 99 is typically also equipped with a radar system for transmitting its position to passing ships. The radar system may also be controlled by the control system 36 and used to measure distances to other floating wind turbines and passing ships. Alternatively, a laser range finder or the like may be controlled by the control system 36 for this purpose.

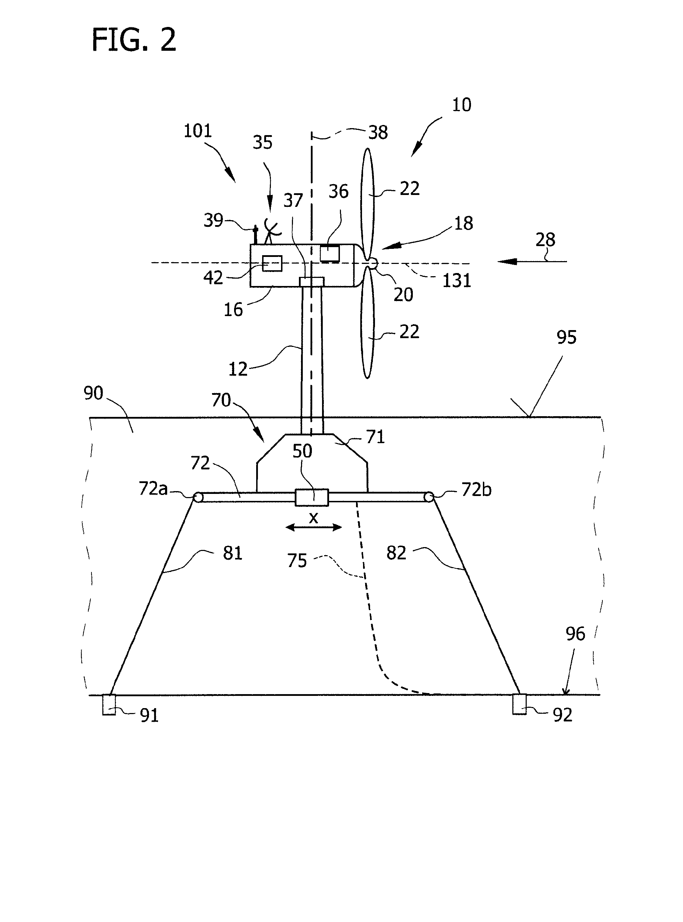

Fig. 2 illustrates schematically an embodiment of a floating offshore wind turbine 101. Floating offshore wind turbine 101 of Fig. 2 is similar to the floating offshore wind turbine 99 of Fig. 1. However, the floating platform 70 of the floating offshore wind turbine 101 is anchored to the seabed 96 by at least two anchor cables 81, 82 such that it is completely immersed in the sea 90. Floating platform 70 includes a main body 71 and unit for attachment 72 in a lower part. Main body 71 provides the lifting force for carrying wind turbine 10 and is typically partly floodable to adjust lifting force. In the exemplary embodiment, main body 71 is mounted to a cantilever 72 with two distal ends 72a, 72b. The anchor cables 81, 82 are fed through the respective distal ends 72a, 72b and connected with respective anchors 91, 92 in the seabed 96. Buoyant force keeps anchor cables 81, 82 substantially taut. The mooring is therefore also known as taut-leg mooring. Instead of cables 81, 82, other flexible coupling members such as chains or ropes may be used.

According to various embodiments of the invention, floating offshore wind turbine 101 includes a drive 50 which enables movements of the floating offshore wind turbine 101 in a horizontal direction as indicated by the double arrow. In the exemplary embodiment, drive 50 is mounted centrally beneath main body 71 and includes two motor driven cable winches (not shown) to change the length of the anchor cables 81, 82. In other embodiments, a motor driven winch is mounted on or close to each distal end 72a, 72b or is included in each anchor 91, 92. When the length of cable 81 between distal end 72a and anchor 91 is shortened and the length of cable 82 between distal end 72a and anchor 91 is increased, or vice versa, floating offshore wind turbine 101 is moved horizontally in x-direction, i.e. horizontally towards anchor 92 and 91, respectively.

Horizontal movements may be used to move the floating offshore wind turbine 101 out of the way of a ship or boat on collision course. Accordingly, the safety on sea may be improved. Horizontal movements may also be used to optimize the horizontal position of wind turbine 10 within an offshore wind farm. For example, shadowing effects between different wind turbines may be at least partially compensated. Accordingly, mechanical load and energy production may be better balanced.

When the total length of the cables 81, 82 between the anchors 91, 92 and the distal ends 721, 72b remains constant, the vertical position of the floating offshore wind turbine 101 is typically not changed during horizontally moving the floating offshore wind turbine 101. Otherwise, the vertical position is typically also changed. Typically, the horizontal and/or vertical movement of the floating offshore wind turbine 101 is controlled by control system 36.

In another embodiment, reference numerals 81 and 82 correspond to parts of a continuous flexible coupling means. The length of the parts is adjusted by a motor driven winch 50 to move floating offshore wind turbine 101. Accordingly, mainly horizontal movements of floating offshore wind turbine 101 are achieved in this embodiment.

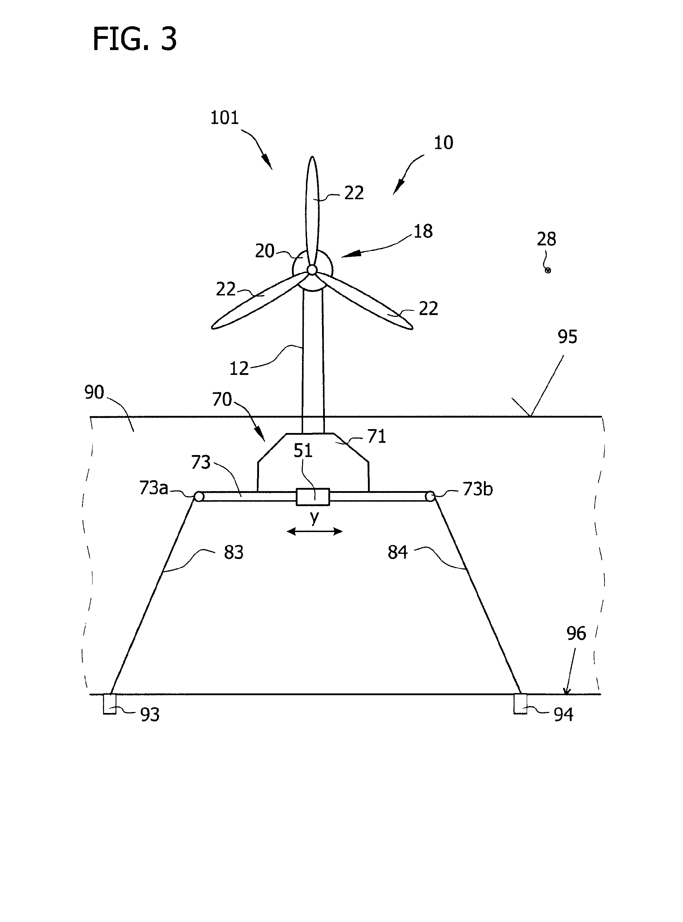

In the embodiment of Fig. 2, wind direction 28 coincides with x-direction. This is however only for clarity reasons as wind turbine 10 may adjust rotor 18 and wind direction 28 using a yaw drive mechanism 37. Moreover, floating offshore wind turbine 101 is typically also movable in all horizontal directions. This is explained in more detail with respect to Fig. 3

Fig. 3 is another schematic view of the floating offshore wind turbine shown in Fig. 2. Fig. 3 is a front view which is orthogonal to the view of Fig. 2. In this view, a further cantilever 73 with two distal ends 73a, 73b is visible. Cantilever 73 is orientated orthogonal to cantilever 72 shown in Fig. 2. Main body 71 is also mounted to cantilever 73. Anchor cables 83, 84 are fed through respective distal ends 73a, 73b and connect a further drive 51 of the floating platform 70 with respective anchors 93, 94 in the seabed 96. Typically, drive 51 includes one or two winches to change the length of the anchor cables 83, 84 for horizontally moving floating offshore wind turbine 101 in elongation direction of the cantilever 73, i.e. in y-direction. This is indicated by the double arrow. As explained with reference to Fig. 2 for drive 50, the two winches of drive 51 may also be arranged at or close to the distal ends 37a, 37b or integrated in the anchors 93, 94.

As the cantilever 73 is substantially orthogonal to cantilever 72 shown in Fig. 2, floating offshore wind turbine 101 may be moved by the drives 50 and 51 horizontally in any direction. Drives 50 and 51 may also be realized as a single device or drive system.

In other words, the floating platform of a floating wind turbine is typically anchored to an underwater ground, typically to a sea bed, with a mooring system which includes a drive system and several anchors. According to certain embodiments of the invention, the drive system is adapted to change the length of the connection between the anchors and the floating platform such that the floating platform is moved in one or more horizontal directions.

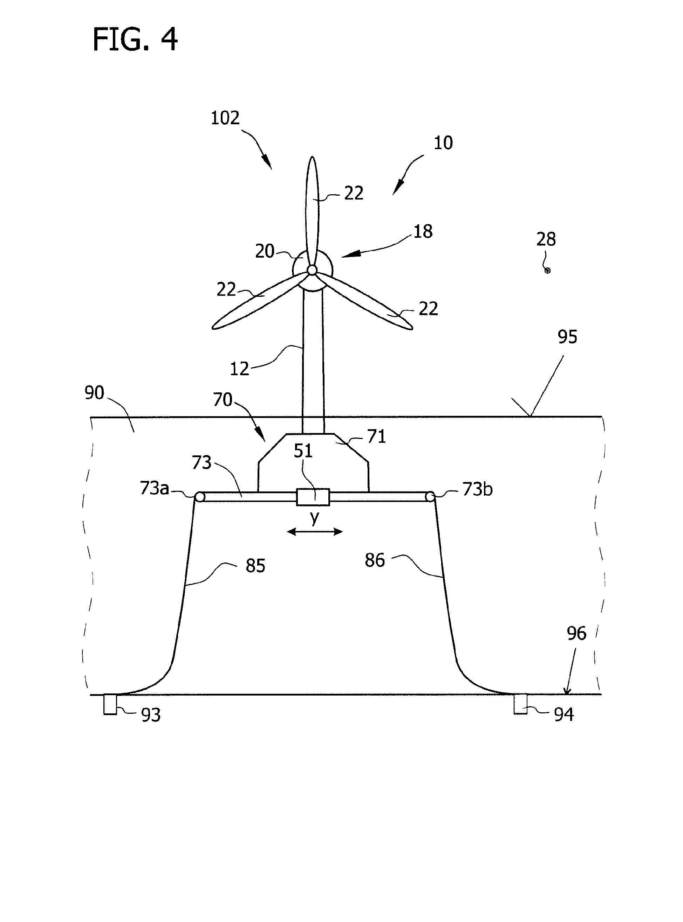

Fig. 4 illustrates schematically an embodiment of a floating offshore wind turbine 102. Floating offshore wind turbine 102 is similar to the floating wind turbine 101 of Figs. 2 and 3. However, instead of taut-leg mooring, a catenary mooring systems is used for anchoring floating platform 70. Accordingly, each of the anchoring ropes, anchor cables or anchor chains 85, 86 that may be used as flexible coupling members to connect the floating platform 70 with anchors 93, 94 sags and typically forms a catenary curve. Compared to taut-leg moorings, catenary mooring systems typically allow larger vertical and horizontal movements.

According to various embodiments of the invention, floating offshore wind turbine 102 includes a drive 51 which allows movement of the floating offshore wind turbine 102 at least in one horizontal direction by changing the length of the flexible coupling members 85, 86 between the floating platform 70 and the anchors 93, 94. Typically, floating offshore wind turbine 102 includes a further drive (not shown) to move the floating platform 70 in another horizontal direction by changing respective flexible coupling members. This has been explained above with respect to Figs. 2 and 3 for taut-leg mooring. Drive 51 and the further drive may also be realized as a single device. Furthermore, drive 51 and the further drive may also be configured to force vertical movements of floating platform 70 by shortening the total length of the flexible coupling members.

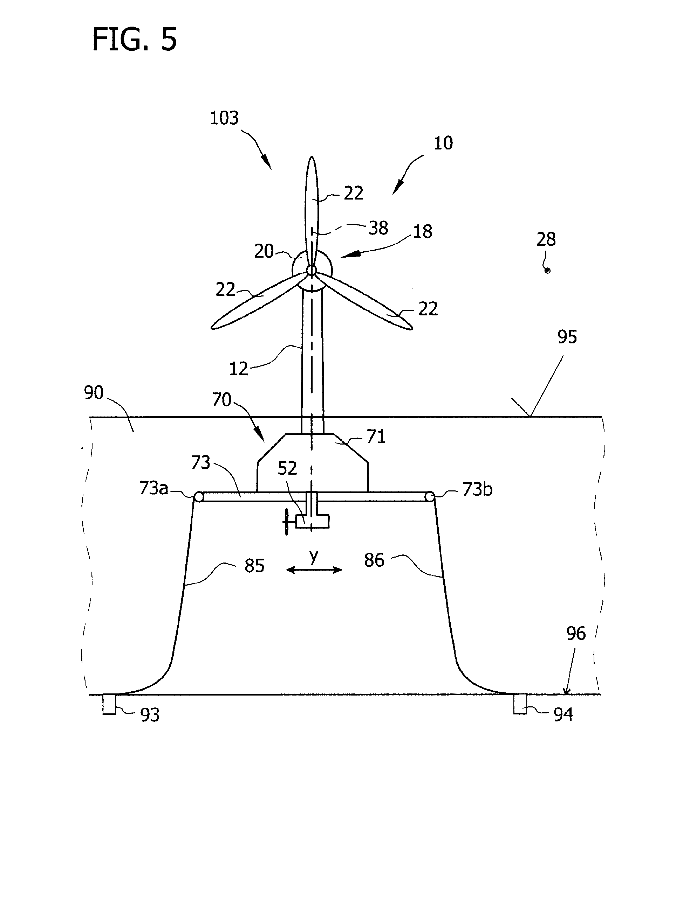

Fig. 5 illustrates schematically an embodiment of a floating offshore wind turbine 103. Floating offshore wind turbine 103 is similar to the floating wind turbine 102 of Fig. 4. However, the length of the flexible coupling members 85, 86 between the floating platform 70 and the anchors 93, 94 is fixed in Fig. 5.

According to an embodiment, a propeller 52, typically an underwater propeller, is connected to floating platform 70 to move platform 70 in a horizontal direction as indicated by the double arrow. Typically, the propeller is rotatably mounted so that it can rotate about axis 38. Accordingly, platform 70 may be moved in any horizontal direction. Alternatively or in addition, two or more propellers may be used. Furthermore, instead of the one or more propellers one or more pump-jet may be used to horizontally move floating platform 70.

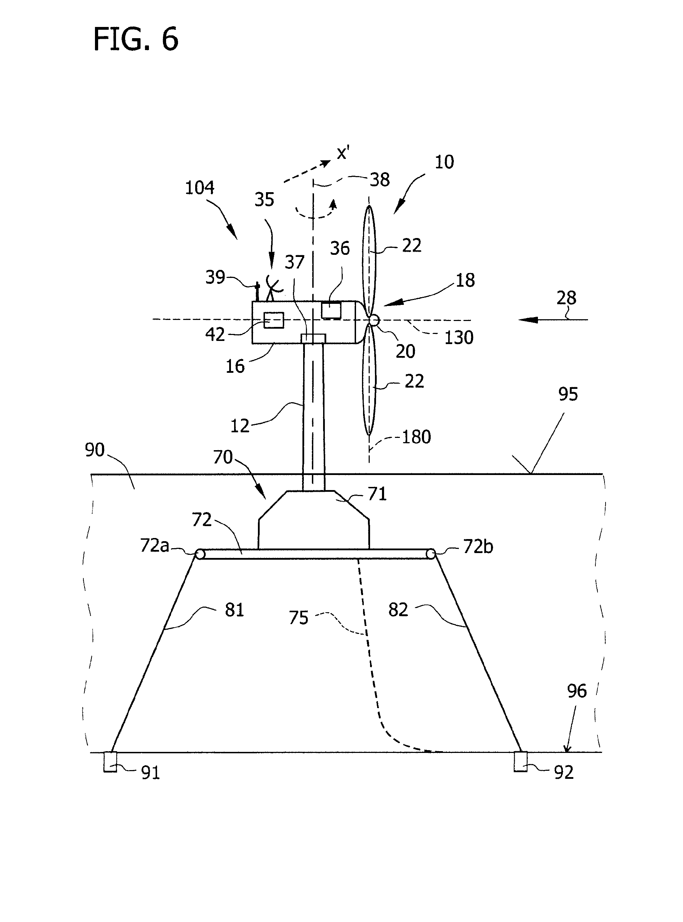

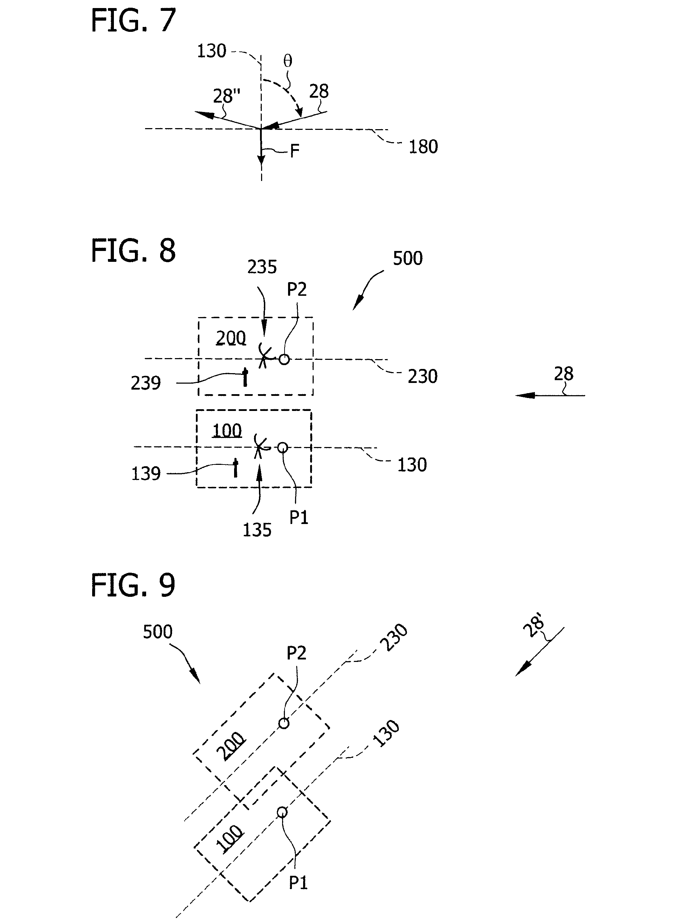

Fig. 6 illustrates schematically an embodiment of a floating offshore wind turbine 104. Floating offshore wind turbine 104 is similar to the floating offshore wind turbine 99 of Fig. 1. Floating offshore wind turbine 104 includes a yaw drive 37 to adjust rotor axis 130 relative to the wind direction 28 by rotating nacelle 16 about yaw axis 38. Typically, rotor axis 130 is maintained parallel to wind direction 28 for maximum power production. In addition to causing rotation of rotor 18, the wind exerts a translatory force on wind turbine 10, and particular on rotor blades 22 which rotate in rotor plane 180. The magnitude and direction of this force depend on the yaw angle between rotor axis 130 and wind direction 28. Accordingly, floating offshore wind turbine 104 is typically pushed or pulled in a horizontal direction x' when the yaw angle is changed as indicated by the dashed arrows. Thus, floating offshore wind turbine 104 may "sail" in a direction which depends on the yaw angle. This is illustrates schematically in Fig. 7.

Fig. 7 shows rotor plane 180 and rotor axis 130 of the wind turbine 10 of Fig. 6. Depending on yaw angle θ between rotor axis 130 and wind direction 28, the incoming air is locally deflected in direction 28" by the rotor blades in rotor plane 180. Accordingly, a force F is exerted on the wind turbine. For a given rotor, the magnitude of force F depends on yaw angle θ, wind velocity, rotor speed and pitch angle. Typically, force F points in direction of rotor axis 130. Thus, the floating wind turbine may be horizontally moved by changing yaw angle θ.

According to an embodiment, control system 36 of wind turbine 10 is adapted to calculate a yaw angle between wind direction 28 and rotor axis 130 such that the floating offshore wind turbine 104 moves towards a given new horizontal position. The new horizontal position may be a new horizontal position in a floating offshore wind park or a position that avoids a possible collision. In other words, control system 36 is adapted to determine for a given new horizontal position and given wind condition, a yaw angle or a sequence of yaw angles such that the floating offshore wind turbine 104 sails towards the new horizontal position. For this purpose, the control system 36 typically analyses the signals of an anemometer, for example wind direction and wind speed. Furthermore, control system 36 typically takes into account the restoring forces of the used mooring system.

It goes without saying, that the different drive mechanism to horizontally move floating offshore wind turbines explained with reference to Figs. 2 to 7 may also be combined. For example, the above explained "sailing" of the floating wind turbine may be used in addition to a mooring system with a drive for changing the length of flexible coupling members between the floating platform and respective anchors. Accordingly, the floating offshore wind turbine may be moved more quickly into the new horizontal position.

Figs. 8 to 10 illustrate embodiments of a floating offshore wind farm 500 and its operation under changing wind condition. For clarity, only two offshore wind turbines 100, 200 of floating offshore wind farm 500 are shown. Floating offshore wind farm 500 may however include any number of wind turbines. The number of wind turbines may, for example, depend on power requirements of the grid, rated power of wind turbines and on geographic conditions.

According to various embodiments of the invention, floating offshore wind farm 500 includes a first wind turbine mounted 100 mounted on a first floating structure, a second wind turbine, a positioning system and a drive system for moving the wind turbines 100 and 200 relative to each other in at least one horizontal direction. For this purpose, the positioning system is typically adapted to determine a horizontal position P1 of the first wind turbine 100 relative to a position P2 of the second wind turbine 200.

In the embodiment of Fig. 8, the positioning system includes two satellite-based positioning systems such as the shown two global positioning systems (GPS) 135 and 235. Alternatively or in addition, a radar system or a laser range finder may be used to determine relative horizontal position P1.

Further, the relative horizontal position of wind turbines 100 and 200 may be given in polar coordinates, e.g. as distance and an angle relative to the wind direction 28 measured by one or both anemometers 139, 239. This information is sufficient to determine or at least estimate if an aerodynamic influence or interaction of the wind turbines 100, 200 is within an acceptable range. The aerodynamic influence may, for example, be a shadowing or wake influence which reduces the energy production. Further, a turbulence caused by one wind turbine may cause increased or fluctuating mechanical loads on the other wind turbine. The dashed rectangles in Figs. 8 to 10 represent exemplary aerodynamic influence boundaries of the wind turbines 100, 200. If the dashed rectangles do not overlap, the aerodynamic influence between the wind turbines 100, 200 is in an acceptable range. The rotor axes 130, 230 of both wind turbines 100, 200 are orientated parallel to the wind direction 28. The wind direction 28 in Fig. 8 may correspond to the main wind direction. Accordingly, positions P1 and P2 of the offshore wind turbines 100 and 200 are chosen such that the dashed rectangles do not overlap when the wind blows in main direction 28. The shape of the aerodynamic influence boundaries typically depends on wind speed, shape of floating wind turbine, rotor speed, pitch angles, yaw angle and wind direction.

When the incoming direction changes to a new wind direction 28', the yaw systems of the offshore wind turbines 100, 200 will typically reorientate the respective rotor axes 130, 230 accordingly. Neglecting the influence of the not shown floating platforms, the aerodynamic influence boundaries will also rotate. This may, however, be accompanied by an increased aerodynamic influence of the wind turbines 100, 200, when the positions P1 and P2 are not changed. This is illustrated in Fig. 9 by the overlapping dashed rectangles. Although absolute positions P1 and P2 and absolute distance between the positions P1, P2 of the wind turbines 100, 200 is not changed, the angle between to the wind direction 28' and the vector between the positions P1 and P2 is changed. Accordingly, wind turbines 100 and 200 may start aerodynamically influencing each other in an unfavorable manner.

This can be avoided in an offshore wind farm by a large enough fixed horizontal distances between offshore wind turbines. This would, however, require a larger area which is not always possible and less economic. According to an embodiment, the area per floating offshore wind turbine in a wind farm which is required to ensure low aerodynamic influence between the offshore wind turbines under changing wind conditions is reduced by horizontally rearranging the floating offshore wind turbines according to the wind condition.

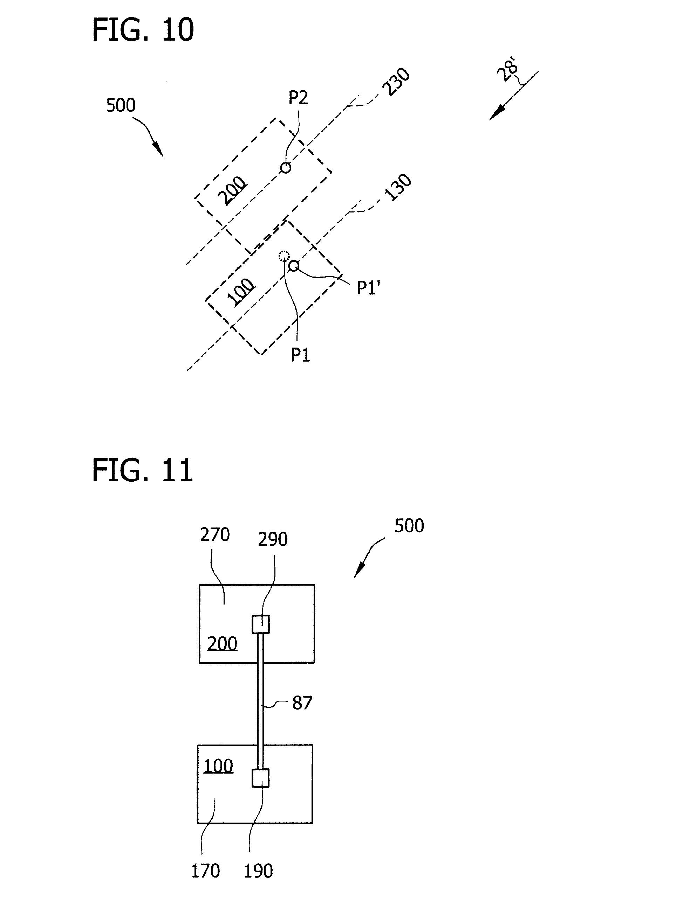

Due to the fact, that the drive system of floating offshore wind farm 500 is able to horizontally move the first offshore wind turbine 100 relative to the second offshore wind turbine 200, the aerodynamic influence between the wind turbines 100, 200 can be reduced or completely avoided when the wind direction changes. This is illustrated in Fig. 10 in which wind turbine 100 is moved to a new horizontal position P1'. Accordingly, the electric power production of the floating offshore wind farm 500 may be increased.

According to an embodiment, the drive system of wind farm 500 is formed by a drive of at least one of the offshore wind turbines 100, 200. Accordingly, the offshore wind turbines 100, 200 can be moved relative to each other in horizontal directions. In the exemplary embodiment explained with respect to Figs. 8 to 10, at least offshore wind turbines 100 is a floating offshore wind turbine 100 with a drive to horizontally move floating offshore wind turbine 100. This drive is used to move wind turbine 100 to a new horizontal position P1'. Typically, both offshore wind turbines 100, 200 of wind farm 500 include individual drives coupled to respective floating structures. Thus, both offshore wind turbines 100, 200 are independently movable in one or more horizontal directions. Accordingly, the freedom of horizontal movement is typically increased compared to an offshore wind farm having floating offshore wind turbines and fixed foundation offshore wind turbines.

The drive of the offshore wind turbines 100, 200 may include a propeller or a pump-jet which is connected to the respective floating platform, and a drive which is adapted to adjust the length of a flexible coupling member between the respective floating platform and an anchor as explained with respect to Figs. 2 to 5.

The drive may also be formed or supported by a yaw drive of the offshore wind turbines 100, 200 as explained with respect to Figs. 6 and 7. In this embodiment, the control system of the respective wind turbine 100, 200 is adapted to determine at given wind direction a yaw angle between the respective wind turbine rotor axis and the wind direction such that the respective floating offshore wind turbine 100, 200 is moved in a desired horizontal direction when the respective yaw drive rotates the rotator axis such that the angle between the rotor axis and the wind direction is set to the yaw angle.

Typically, offshore wind farm 500 includes a control system to coordinate positioning of floating wind turbines 100, 200. According to an embodiment, control system is adapted to determine the horizontal position P1 of wind turbine 100, for example using a GPS, a radar system and/or a laser rangefinder. The control system is further adapted to calculate a new horizontal position P1' of wind turbine 100, and to control the drive system to move wind turbine 100 towards the new horizontal position P1'. The control system may, e.g., be the control system of one of the offshore wind turbines 100, 200.

According to an embodiment, the control system of wind farm 500 is adapted to calculate or estimate for given wind conditions the horizontal position P1' of floating offshore wind turbine 100 such that the electric power production of floating wind farm 500 is increased when floating offshore wind turbine 100 is moved to the new horizontal position P1'. Typically, the control system of wind farm 500 monitors one or more anemometers 135, 235 to determine the actual wind condition. If wind condition, for example wind direction changes, new positions of the floating wind turbines 100 and/or 200 are typically calculated such that an aerodynamic influence is minimized or at least reduced when the floating wind turbines 100 and/or 200 move to their new positions.

Alternatively or in addition, the control system of wind farm 500 is typically adapted to calculate at given wind condition new horizontal position P1' of the first wind turbine 100 such that the mechanical load of at least one the offshore wind turbines 100, 200 is reduced when the first wind turbine 100 is moved to the new horizontal position P1'. For this purpose, the control system of wind farm 500 typically monitors an operational status of offshore wind turbines 100 and an operational status of offshore wind turbines 200. The operational status of the offshore wind turbines 100, 200 may include power production, voltage of the generator, rotary speed of the rotor, mechanical load of the rotor blades, yaw angle relative to wind direction, and the like. For example, turbulence behind one offshore wind turbine may cause fluctuating and/or increased load on the rotor blades of another offshore wind turbine. The control system of wind farm 500 is typically adapted to detect such a situation by monitoring at least the mechanical load of the rotor blades. Thereafter, new horizontal positions of the offshore wind turbines are calculated or estimated by the control system such that the aerodynamic influence is reduced. In doing so, mechanical load peaks may be avoided and thus maintenance cost reduced and/or life time of offshore wind turbines increased. Furthermore, the increased noise which may be associated with an aerodynamic influence or turbulence may be avoided. Thus, the acoustic impact on the environment may be reduced. In another example, control system of wind farm 500 uses monitored values of power production to determine new horizontal positions such that power production is optimized and/or more equally distributed between the offshore wind turbines when the offshore wind turbines are in their new horizontal positions.

Fig. 11 illustrate a further embodiment of a floating offshore wind farm 500. For clarity, only two offshore wind turbines 100, 200 of floating offshore wind farm 500 are shown.

According to an embodiment, floating offshore wind farm 500 includes a first wind turbine 100 mounted on a first floating structure 170, a second wind turbine 200, mounted on a second floating structure 270, and a drive system which is adapted to exert substantially horizontal forces between the two floating structures 170, 270. In the exemplary embodiment, the drive system includes two winches 190, 290 which are adapted to change the length of a rope, cable or chain 87. Accordingly, the wind turbines 100 and 200 can be moved relative to each other in at least one horizontal direction. Thus, repositioning and/or stabilizing the positions of the floating offshore wind turbines 100, 200 in the offshore wind farm 500 can be assisted. In another embodiment, only one winch is used to change the length of a flexible coupling member between two floating offshore wind turbines.

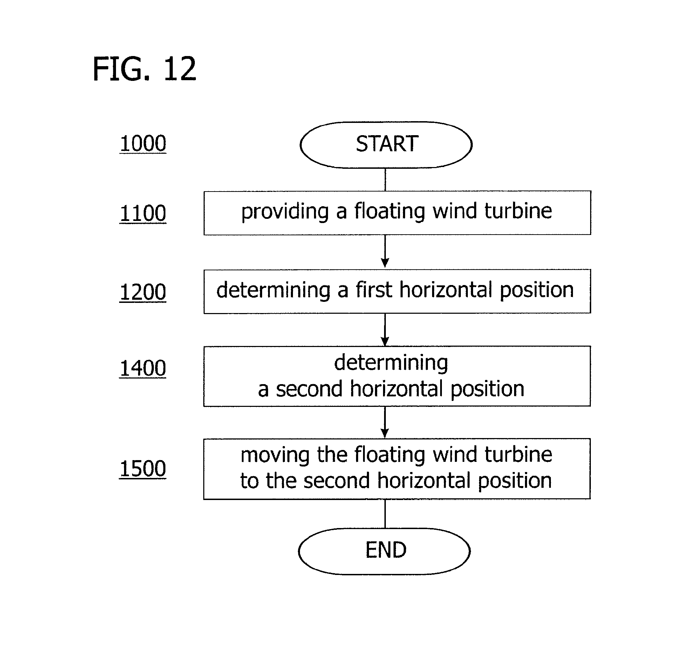

Fig. 12 illustrates a method 1000 for horizontally positioning a floating offshore wind turbine according to an embodiment. Method 1000 includes a block 1100 for providing a floating wind turbine. The floating wind turbine includes a wind turbine mounted on a floating structure which is anchored to an underwater ground, typically a sea bed or a lake bed. Typically, a floating offshore wind turbine having a drive to horizontally move the floating offshore wind turbine as explained with reference to Figs. 2 to 11 is provided in block 1100. Method 1000 further includes a block 1200 for determining a first horizontal position of the floating wind turbine, a block 1400 for determining a second horizontal position of the floating wind turbine, and a block 1500 for moving the floating wind turbine to the second horizontal position. The first horizontal position may be an absolute position. The absolute position may be measured by a satellite-based positioning system such as a GPS in block 1200. The first horizontal position may also be a relative position to another wind turbine in an offshore wind farm or to a passing ship. In this case, the first position may be calculated from absolute positions or measured by a radar system or a laser range finder system. The first and second horizontal positions may correspond to a horizontal position and a new horizontal position of a floating offshore wind turbine in an offshore wind farm as explained with reference to Fig. 10. The first and second horizontal positions may also correspond to a normal position of a floating offshore wind turbine and a deflected position in which a collision with a ship is avoided.

The floating wind turbine typically includes an anemometer for measuring a wind condition, a rotor axis and a yaw drive to horizontally orientate the rotor axis relative to the wind direction. According to a further embodiment, block 1500 includes operating the yaw drive such that wind turbine is moved towards the second horizontal position. In other words, a yaw angle between rotor axis and wind direction is changed in block 1500 such that the floating wind turbine sails towards the second horizontal position. The floating structure of the floating wind turbine is typically anchored to the underwater ground with a mooring system which allows horizontal movement of the floating structure within boundaries. Typically, restoring forces and/or boundaries of the mooring system are taken into account in block 1400.

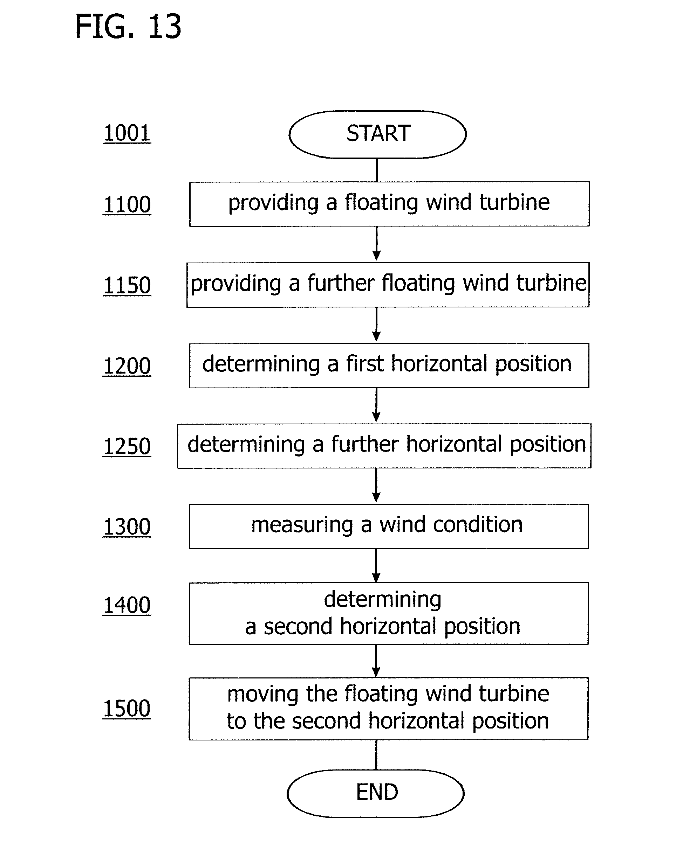

Fig. 13 illustrates a method 1001 for horizontally positioning a floating offshore wind turbine according to another embodiment. Method 1001 is similar to method 1000. Method 1001 additionally includes a block 1150 for providing a further floating wind turbine, a block 1250 for determining a further horizontal position, i.e. a horizontal position of the further floating wind turbine, and a block 1300 for measuring a wind condition such as a wind speed and/or wind direction. The further floating wind turbine is typically also a floating offshore wind turbine having a drive to horizontally move the floating offshore wind turbine as explained with reference to Figs. 2 to 11. According to an embodiment, method 1001 takes into account the wind condition and the horizontal position of the further wind turbine for determining the second horizontal position of the floating wind turbine in block 1400. Accordingly, method 1001 may be used to change the positions of floating wind turbines in an offshore wind farm when the wind condition changes.

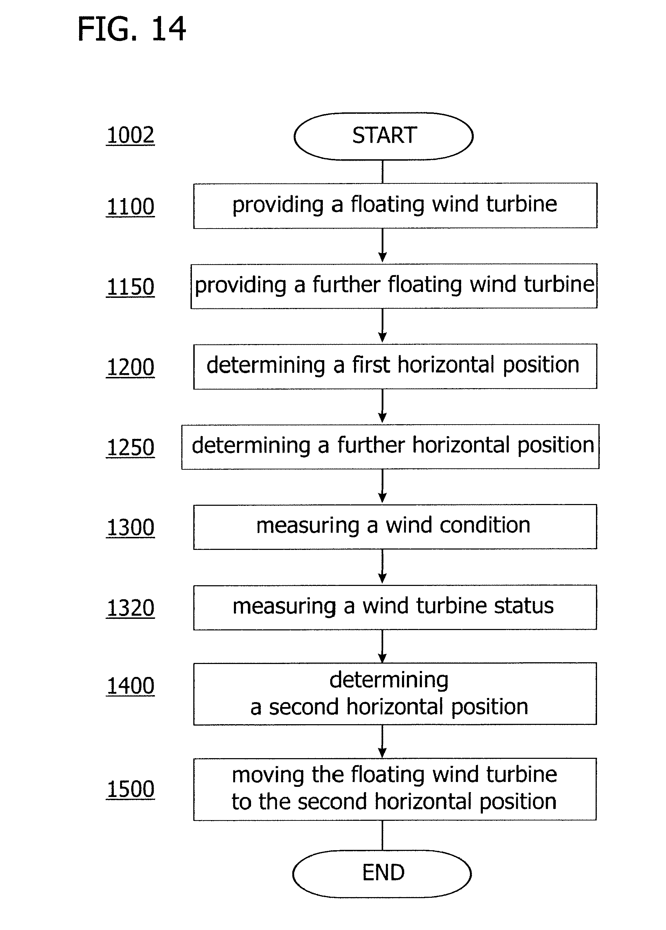

Fig. 14 illustrates a method 1002 for horizontally positioning a floating offshore wind turbine according to yet another embodiment. Method 1002 is similar to method 1001. Method 1002 additionally includes a block 1320 for measuring a wind turbine operational status, i.e. an operational status of the floating wind turbine and/or an operational status of the further floating wind turbine. According to an embodiment, method 1002 takes into account the wind condition and the operational status of at least one floating wind turbine in block 1400. Accordingly, method 1002 may be used to rearrange the positions of floating wind turbines in an offshore wind farm depending on wind condition and operational status of one or more floating wind turbines. For example, the floating wind turbines may be rearranged to distribute the energy production more uniformly or to maximize energy production of an offshore wind farm. In this example, the power production of a floating wind turbine may be used as wind turbine operational status.

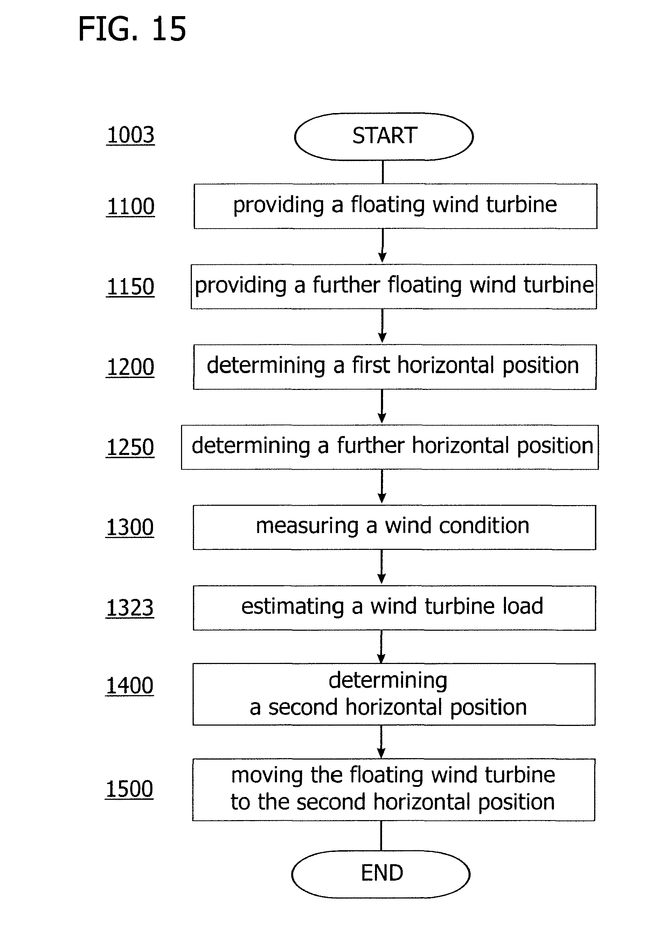

Fig. 15 illustrates a method 1003 for horizontally positioning a floating offshore wind turbine according to still another embodiment. Method 1003 is similar to method 1002. Method 1003 includes the more specific block 1323 for estimating a wind turbine load in stead of the more general block 1320 for measuring a wind turbine operational status. Accordingly, method 1003 may be used to rearrange the positions of floating wind turbines in an offshore wind farm depending on wind condition such that load peaks of individual floating wind turbines in an offshore wind farm are avoided or reduced. Thus, maintenance costs may be reduced and/or the life time of the floating wind turbines increased.

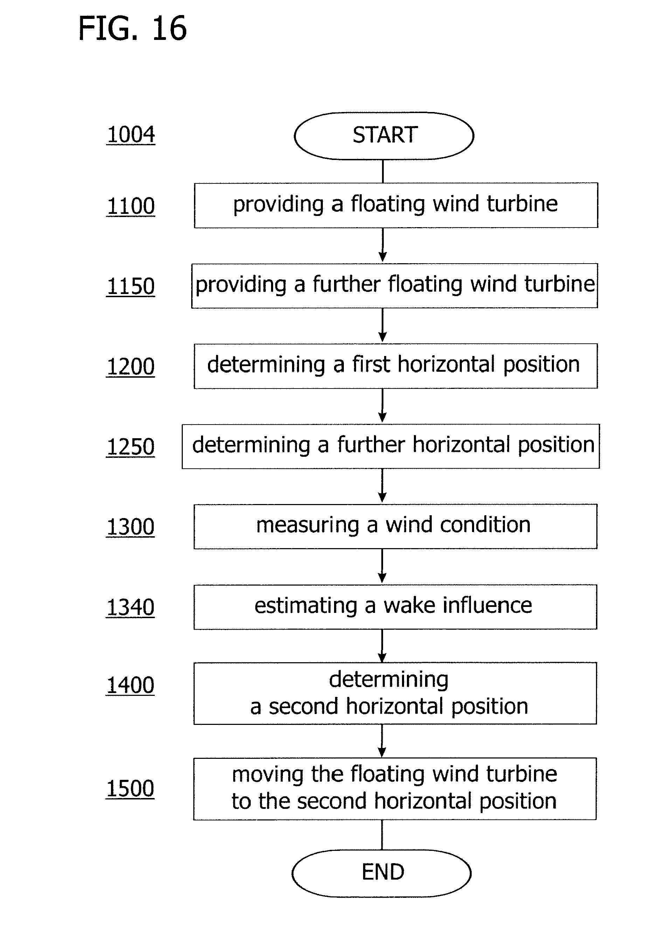

Fig. 16 illustrates a method 1004 for horizontally positioning a floating offshore wind turbine according to an embodiment. Method 1004 is similar to method 1001. Method 1004 additionally includes a block 1340 for estimating a wake influence between the floating wind turbine and the further floating wind turbine. Typically, the second horizontal position is calculated or estimated in block 1400 such that the wake influence is reduced when the floating wind turbine is moved to the second horizontal position in block 1500. Accordingly, the mechanical load of the floating wind turbine and/or the further floating wind turbine may be reduced. Further, the overall power production of the wind turbines in an offshore wind farm may be increased.

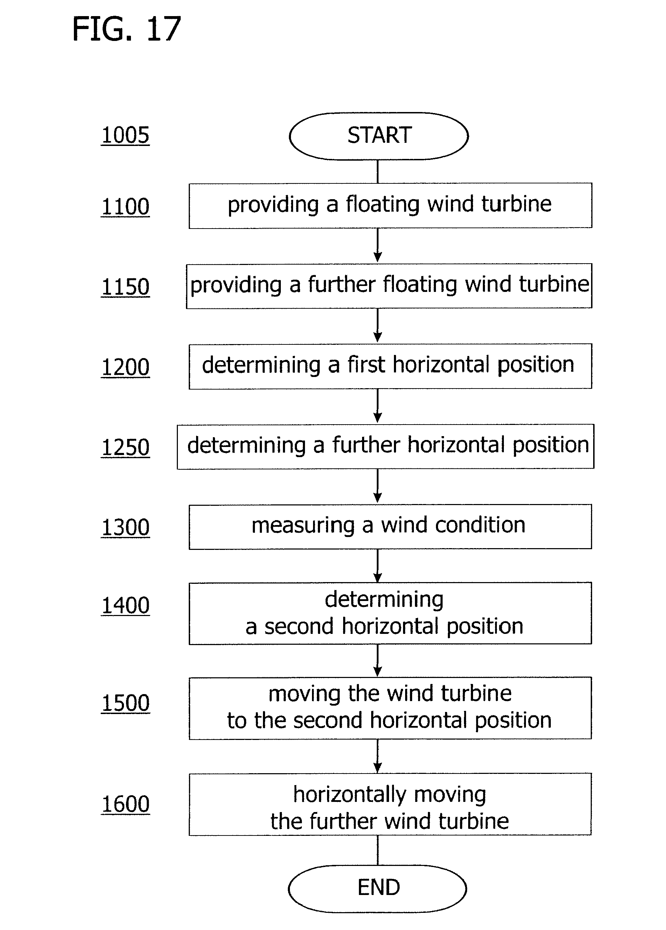

Fig. 17 illustrates a method 1005 for horizontally positioning a floating offshore wind turbine according to yet another embodiment. Method 1004 is similar to method 1001.

Method 1005 additionally includes a block 1600 for horizontally moving the further wind turbine. Accordingly, the freedom to position the wind turbines in a floating offshore wind farm is increased. Thus, the positioning of wind turbines in the floating offshore wind farm may be more flexible with respect to changing wind conditions. It goes without saying that block 1600 may also be added to the methods 1001 to 1004 and that the sequence of blocks 1500 and 1600 may be changed.

Various of the above-described floating offshore wind turbines and methods facilitate a flexible horizontal positioning of wind turbines in an offshore wind farm. This enables optimizing the positioning of wind turbines with respect to overall power production, distribution of power production, and/or mechanical load. Furthermore, floating offshore wind turbines are enabled to avoid an obstacle such as a ship on colliding course. Accordingly, safety may be increased.

Exemplary embodiments of floating offshore wind turbines, floating offshore wind farms and methods for their operation are described above in detail. The systems and methods are not limited to the specific embodiments described herein, but rather, components of the systems and/or steps of the methods may be utilized independently and separately from other components and/or steps described herein. The embodiments are not limited to practice with respect to wind turbines and wind farms installed in deep sea. Rather, the exemplary embodiment can be implemented and utilized in connection with many other applications of floating wind turbines. For example, wind farms installed close to the coast, e.g. in a fjord, or in a lake may use the floating wind turbines and the methods disclosed herein. Moving wind turbines of a wind farm relative to each other in horizontal directions facilitate increase of electric power production and/or reducing the mechanical loads of the wind turbines. Thus, maintenance cost of floating wind turbines may be reduced and/or lifetime of floating wind turbines increased.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A floating offshore wind turbine, comprising:
   a floating platform anchored to an underwater ground;
   a wind turbine mounted on the floating platform; and,
   a drive adapted to move the floating platform in at least one horizontal direction.
2. The floating offshore wind turbine of clause 1, wherein the floating platform is anchored to the underwater ground with a flexible coupling member connecting the floating platform with an anchor, and wherein the drive is adapted to adjust the length of the flexible coupling member between the floating platform and the anchor.
3. The floating offshore wind turbine of any preceding clause, wherein the flexible coupling member is selected from a group consisting of an anchoring rope, an anchor cable and an anchor chain.
4. The floating offshore wind turbine of any preceding clause, wherein the drive is further adapted to move the floating platform in a vertical direction.
5. The floating offshore wind turbine of any preceding clause, wherein the drive comprises a propeller or a pump-jet which is connected to the floating platform.
6. The floating offshore wind turbine of any preceding clause, wherein the wind turbine comprises a rotor axis, a control system, and a yaw drive to horizontally orientate the rotor axis relative to a wind direction, wherein the floating offshore wind turbine comprises an anemometer adapted to transmit the wind direction to the control system, and wherein the control system is adapted to determine for a given new horizontal position of the floating offshore wind turbine a yaw angle such that the floating offshore wind turbine is moved towards the new horizontal position when the angle between the rotator axis and the wind direction is set to the yaw angle.
7. A floating offshore wind farm, comprising:
   a first wind turbine mounted on a first floating structure;
   a second wind turbine;
   a positioning system adapted to determine a horizontal position of the first wind turbine relative to the second wind turbine; and,
   a drive system adapted to horizontally move the first wind turbine relative to the second wind turbine.
8. The floating offshore wind farm of any preceding clause, further comprising:
   a control system adapted to receive the horizontal position of the first wind turbine, to calculate a new horizontal position of the first wind turbine, and to control the drive system to move the first wind turbine towards the new horizontal position.
9. The floating offshore wind farm of any preceding clause, further comprising:
   an anemometer adapted to transmit a wind condition to the control system, wherein the control system is adapted to determine the new horizontal position of the first wind turbine such that the electric power production of the floating wind farm is increased when the first wind turbine is at the new horizontal position.
10. The floating offshore wind farm of any preceding clause, wherein the control system is adapted to receive a first operational status of the first wind turbine and a second operational status of the second wind turbine, and wherein the control system is adapted to determine the new horizontal position of the first wind turbine such that the mechanical load of the first wind turbine and/or the second wind turbine is decreased when the first wind turbine is at the new horizontal position.
11. The floating offshore wind farm of any preceding clause, further comprising:
   an anemometer adapted to transmit a wind direction to the control system;
      wherein the first wind turbine comprises a rotor comprising a rotor axis and a yaw drive to horizontally orientate the rotor axis relative to the wind direction, and wherein the control system is adapted to determine a yaw angle such that the first wind turbine is moved towards the new horizontal position when the angle between the rotator axis and the wind direction is set to the yaw angle.
12. The floating offshore wind farm of any preceding clause, wherein the positioning system comprises at least one of a satellite positioning system, a radar system and a laser rangefinder.
13. The floating offshore wind farm of any preceding clause, wherein the second wind turbine is mounted on a second floating structure, and wherein the drive system comprises a first drive which is adapted to horizontally move the first wind turbine and a second drive which is adapted to horizontally move the second wind turbine.
14. A method for positioning a floating offshore wind turbine comprising a wind turbine mounted on a floating structure which is anchored to an underwater ground, the method comprising:
   providing the floating offshore wind turbine;
   determining a first horizontal position of the floating offshore wind turbine;
   determining a second horizontal position; and,
   moving the floating offshore wind turbine to the second horizontal position.
15. The method of any preceding clause, further comprising:
   providing a further wind turbine mounted on a further floating structure which is anchored to the underwater ground;
   measuring a horizontal position of the further wind turbine; and,
   measuring a wind condition,
      wherein determining a second horizontal position takes into account the wind condition and the horizontal position of the further wind turbine.
16. The method of any preceding clause, wherein determining a second horizontal position comprises measuring an operational status of the wind turbine and/or an operational status of the further wind turbine.
17. The method of any preceding clause, wherein determining a second horizontal position comprises estimating an aerodynamic influence between the wind turbine and the further wind turbine.
18. The method of any preceding clause, wherein determining a second horizontal position comprises estimating the load of the wind turbine and/or the further wind turbine.
19. The method of any preceding clause, further comprising horizontally moving the further wind turbine.
20. The method of any preceding clause, wherein the wind turbine comprises an anemometer for measuring a wind direction, a rotor axis and a yaw drive to horizontally orientate the rotor axis relative to the wind direction, and wherein moving the wind turbine comprises operating the yaw drive such that the second wind turbine is moved towards the new horizontal position.

## Claims

1. A floating offshore wind turbine (101, 103, 103, 104), comprising:
a floating platform (70) anchored to an underwater ground (96);
a wind turbine (10) mounted on the floating platform (70); and
a drive (50, 51, 52) adapted to move the floating platform (70) in at least one horizontal direction.

2. The floating offshore wind turbine (101, 103, 103, 104) of claim 1, wherein the floating platform (70) is anchored to the underwater ground (96) with a flexible coupling member (81, 82, 83, 84, 85, 86) connecting the floating platform (70) with an anchor (92, ,93, 94, 95), and wherein the drive (50, 51, 52) is adapted to adjust the length of the flexible coupling member (81, 82, 83, 84, 85, 86) between the floating platform (70) and the anchor (92, ,93, 94, 95).

3. The floating offshore wind turbine (101, 103, 103, 104) of claim 2, wherein the flexible coupling member (81, 82, 83, 84, 85, 86) is selected from a group consisting of an anchoring rope, an anchor cable and an anchor chain.

4. The floating offshore wind turbine (101, 103, 103, 104) of any of the claims 1 to 3, wherein the drive (50, 51, 52) is further adapted to move the floating platform (70) in a vertical direction.

5. The floating offshore wind turbine (101, 103, 103, 104) of any of the preceding claims, wherein the drive (50, 51, 52) comprises a propeller or a pump-jet which is mounted to the floating platform (70).

6. A floating offshore wind farm (500), comprising at least one floating offshore wind turbine (100) according to any of the claims 1 to 5; and a positioning system adapted to determine a horizontal position of at least one floating offshore wind turbine (100) relative to another wind turbine (200).

7. The floating offshore wind farm (500) of claim 6, further comprising:
a control system (36) adapted to receive the horizontal position of the at least one floating offshore wind turbine (101, 103, 103, 104), to calculate a new horizontal position of the at least one floating offshore wind turbine (101, 103, 103, 104), and to control the drive (50, 51, 52) to move the at least one floating offshore wind turbine (100) towards the new horizontal position.

8. A method (1000, 1001, 1002, 1003, 1004, 1005) for positioning a floating offshore wind turbine (100) comprising a wind turbine (10) mounted on a floating structure which is anchored to an underwater ground (96); comprising:
providing the floating offshore wind turbine (100);
determining a first horizontal position of the wind turbine (100);
determining a second horizontal position; and
moving the wind turbine (100) to the second horizontal position.

9. The method (1000, 1001, 1002, 1003, 1004, 1005) of claim 8, further comprising:
providing a further wind turbine (200) mounted on a further floating structure which is anchored to the underwater ground (96);
measuring a horizontal position of the further wind turbine (200); and
measuring a wind condition.

10. The method (1000, 1001, 1002, 1003, 1004, 1005) of claim 8 or 9, wherein determining a second horizontal position takes into account at least one of a wind condition, the horizontal position of the further wind turbine (200), an operational status of the wind turbine (100), an operational status of the further wind turbine (200), an aerodynamic influence between the wind turbine (100) and the further wind turbine (200), a load of the wind turbine (100), and a load of the further wind turbine (200).
